(19) Europäisches Patentamt
European Patent Office
Office européen des brevets

(11) **EP 1 531 614 B1**

(12) **FASCICULE DE BREVET EUROPEEN**

(45) Date de publication et mention
de la délivrance du brevet:
**10.07.2013 Bulletin 2013/28**

(51) Int Cl.:
***H04N 1/64*** *(2006.01)*

(21) Numéro de dépôt: **04392041.2**

(22) Date de dépôt: **12.11.2004**

(54) **Procédé de traitement d'une image destinée à être affichée avec une réduction du nombre de couleurs**

Bildverarbeitungsverfahren zur Darstellung eines Bildes mit einer reduzierten Anzahl von Farben

Image processing method for displaying an image with a reduced number of colours

(84) Etats contractants désignés:
**AT BE BG CH CY CZ DE DK EE ES FI FR GB GR HU IE IS IT LI LU MC NL PL PT RO SE SI SK TR**

(30) Priorité: **14.11.2003 FR 0313353**

(43) Date de publication de la demande:
**18.05.2005 Bulletin 2005/20**

(73) Titulaire: **STMicroelectronics S.A.**
**92120 Montrouge (FR)**

(72) Inventeur: **Meroth, Yan**
**38330 Saint-Ismier (FR)**

(74) Mandataire: **Schuffenecker, Thierry**
**120 Chemin de la Maure**
**06800 Cagnes sur Mer (FR)**

(56) Documents cités:
**EP-A- 0 359 080     EP-A- 1 039 416**
**EP-A- 1 137 266     US-A- 5 469 190**
**US-A- 5 495 346     US-A- 5 777 599**

• **JARVIS J F ET AL: "A SURVEY OF TECHNIQUES FOR THE DISPLAY OF CONTINUOUS TONE PICTURE ON BILEVEL DISPLAYS", COMPUTER GRAPHICS AND IMAGE PROCESSING, ACADEMIC PRESS. NEW YORK, US, vol. 5, 1 January 1976 (1976-01-01), pages 13-40, XP000605313,**

**Description**

**Domaine technique de l'invention**

La présente invention concerne le traitement d'image et plus spécialement un procédé destiné à traiter une image destinée à être affichée avec une réduction du nombre de couleurs.

**Etat de la technique**

L'affichage d'images sur un écran qui présente un nombre restreint de couleurs requiert un traitement spécifique afin d'éviter des défauts qui sont particulièrement gênants si l'on s'abstient de toute précaution.

En effet, en l'absence de tout traitement correctif, lorsqu'on affiche une image qui est codée, par exemple, en 16 millions de couleurs sur un écran présentant un nombre restreint de couleurs (par exemple 4096 couleurs) on observe l'apparition d'effets moirés qui ne font pas partie de l'image originelle. En vidéo, apparaissent des scintillements (dénommés « *flickering* » dans la littérature anglo-saxonne), des zones mouvantes qui ne font pas partie de la vidéo originelle. En bref, autant de défauts visuels localisés que l'on désigne souvent, dans l'état de l'art, par l'appellation artefacts.

On connaît un certain nombre de techniques pour réduire l'apparition de tels artefacts. D'une manière générale, les techniques connues procèdent d'une approche commune, que l'on désigne sous la dénomination anglo-saxonne de *DITHERING* (littéralement « hésiter »). Dans toutes ces techniques, on opère des petites variations dans le jeu de couleurs affichables (supposé restreint par hypothèse) de manière à ce que ces variations soient intégrées par l'oeil et donnent l'illusion d'un affichage d'un nombre plus important de couleurs.

Une première technique connue - sans doute la plus simple à mettre en oeuvre - est basée sur l'ajout, pour chacun des pixels affiché - d'un bruit aléatoire sur chacune des composantes de couleur. Cette technique permet de réduire quelque peu l'effet de moiré. En revanche, l'ajout de bruit aléatoire dégrade clairement la qualité de l'image originelle et engendre dans l'image résultante l'apparition de grains (« *grainy* » dans la littérature anglo-saxonne) ainsi que des effets de scintillement et fourmillement s (*flickering*) dans le cas d'une vidéo.

Dans une seconde technique, désignée sous l'appellation anglo-saxonne de *ORDERED DITHERING,* on traite l'image avant son affichage en remplaçant des zones contenant des dégradés non affichables par des zones comportant des motifs affichables, en procédant à une analyse effectuée sur un groupe de pixels adjacents. Cette technique fait l'objet de l'article: "Frequency analysis of ordered dither", SPIE vol 1079, 1989, p. 361-373 , Robert Ulichney . D'une manière générale, si elle améliore encore le traitement par rapport à la technique précédente, cette technique fait apparaître de nouveaux motifs (ou artefacts) qui sont aisément reconnaissables à l'oeil. De plus, dans le cas d'une vidéo, cette technique provoque des scintillements et des fourmillements, voire même des zones mouvantes qui ne font pas partie de la vidéo originelle.

Une troisième technique connue et sans doute la plus sophistiquée est décrite dans la référence "An adaptive algorithm for spatial grayscale" proceedings of the society for information display », vol17, n°2, p. 75-77, 1976, Floyd and Steinberg. Dans cette technique, on procède par diffusion de l'erreur sur un pixel (entre l'image originale et l'image affichée) sur les pixels adjacents. La mise en oeuvre de cette technique requiert une grande puissance de calcul et se révèle par conséquent coûteuse. En outre, si elle permet de supprimer les effets de moiré et le scintillement, on constate quand même l'apparition d'un important aspect granuleux qui s'avère finalement gênant. En particulier pour une vidéo, car il se transforme en fourmillement.

EP1039416 décrit un procédé pour réduire l'effet de l'erreur de troncation à l'imagerie numérique en fournissant une première représentation numérique d'une image et en transformant l'image de ladite première représentation numérique à une deuxième représentation numérique en ajoutant un nombre de bruit.

EP1137266 décrit un procédé de réduction d'un signal auquel une correction gamma est apportée. Le système utilise un circuit bruiteur venant ajouter un bruit au signal numérique d'entrée.

US5469190 décrit la conversion d' une couleur codée sur 24 bits en une couleur codée sur 15 bits.

EP0359080 décrit un dispositif d'ecran couleur qui inclut des dispositifs de tramage pour afficheur chaque couleur primaire.

US5495346 décrit un générateur d'élément pour une matrice de tramage comportant un dispositif logique qui reçoit une adresse de ligne et une adresse de colonne et effectue une opération de logique afin de produire un élément de tramage correspondant à l'adresse de rangée et à l'adresse de colonne.

US5777599 décrit un dispositif à traitement d'images amélioré qui fournit plus rapidement une image qui semble avoir une plus grande résolution en employant de tramage à un appareil de sortie ayant un résolution inférieur.

Toutes les techniques connues qui viennent d'être rappelées sont en outre classiquement utilisées pour traiter des images fixes. Clairement, les séquences d'images vidéo requièrent un traitement spécifique pour éviter l'apparition d'autres objets ou artefacts que l'on ne percevrait peut être pas si l'on appliquait les techniques connues sur des images fixes.

Tel est le but de la présente invention.

## Exposé de l'invention

La présente invention a pour but de proposer une technique de traitement d'images, efficace et peu onéreuse, qui permette de supprimer ou tout au moins de réduire fortement l'apparition d'artefacts lorsque l'image ou les images sont affichées avec un nombre restreint de couleurs.

Un autre but de la présente invention consiste à proposer un procédé de traitement d'une image particulièrement adapté aux séquences vidéos.

L'invention réalise ces buts au moyen d'un procédé de traitement d'une image destinée à être affichée avec un nombre n réduit de composantes de couleurs selon la revendication 1.

Ainsi la méthode évite de modifier les pixels qui sont affichables, ce qui réduit d'autant la dégradation de l'image originelle. On se trouve à moins d'un niveau de quantification de l'image réelle. En outre, en réalisant un lien entre la gestion de l'arrondi et la position du pixel au sein de l'image, on évite les effets résultants de l'introduction d'un bruit aléatoire et l'on améliore considérablement l'effet visuel: on n'observe pas d'aspect granuleux et les effets de moire sont très fortement atténués. Le procédé selon l'invention est particulièrement adapté au traitement d'image vidéos. On n'observe pas d'apparition de motifs mouvants, ni scintillement ni fourmillement sur les images mouvantes que l'on observerait avec les autres techniques classiques.

Pour faire disparaître les effets de moire, on réalise ainsi un compromis entre, d'une part, le fait de procéder à des petites variations permettant à l'oeil d'intégrer et d'avoir l'illusion d'un plus grand nombre de couleurs et, d'autre part, les effets d'un bruit trop aléatoire qui engendre l'effet granuleux (*Grainy effect*) ou les effets d'un bruit trop déterministe qui engendre des motifs facilement décelables par l'oeil.

De préférence, l'arrondi dynamique est fixé au moyen d'une loi SEUIL (n, x, y) dépendant notamment de la position du pixel à afficher.

Dans un mode de réalisation particulier, l'arrondi dynamique est réalisé au moyen d'un jeu de trois seuils ¼, ½ et ¾ qui sont successivement mis en oeuvre dans l'opération de réduction de chacune des composantes de couleurs.

De préférence, on peut orienter l'effet obtenu suivant une direction privilégiée suivant l'ordre de séquencement des trois seuils, de façon à améliorer le résultat visuel en fonction du système réalisant l'affichage de l'image

L'invention a également pour objet la réalisation d'un dispositif de traitement d'une image destinée à être affichée avec un nombre restreint de couleurs. selon la revendication 3.

## Description des dessins

D'autres caractéristiques, but et avantages de l'invention apparaîtront à la lecture de la description et des dessins ci-après, donnés uniquement à titre d'exemples non limitatifs. Sur les dessins annexés :

La figure 1 illustre un mode de réalisation du procédé selon l'invention.

La figure 2 représente un exemple de codage de la valeur $C_{out}$ , codée sur 6 bits .

La figure 3 illustre la manière de privilégier une direction à 45 degrés au moyen d'un compteur 3-2-1.

## Description d'un mode de réalisation préféré

Le procédé que l'on va décrire est adapté au traitement d'images - généralement en couleurs vraies (codées par exemple sur 24 bits) que l'on destine à un affichage présentant un nombre restreint de couleurs. On peut songer tout naturellement aux images à afficher sur les ordinateurs portables ayant des capacités limitées au niveau de l'affichage et également tous les dispositifs portables, tel que les « *organiseurs* » (ou *Portable Document Assistant PDA*) et même les téléphones portables, lesquels présentent également des capacités d'affichage réduites. D'une manière générale, on envisagera tout dispositif d'affichage capable d'afficher, de projeter, d'imprimer ou de visualiser des images en couleurs avec un nombre restreint de couleurs. Le procédé est également applicable même lorsque l'on envisage l'utilisation d'un afficheur en mode dégradé, à savoir capable d'afficher un grand nombre de couleurs mais utilise pour n'en afficher qu'un nombre restreint.

On envisagera tout particulièrement, mais non exclusivement, le cas d'images de type vidéo car l'invention, comme on va le voir, s'applique tout spécialement et avantageusement à ce type d'images.

Suivant le principe de l'invention, pour chacune des composantes de couleurs (Rouge, Vert ou Bleu) on procède à une réduction du nombre de couleurs qui est basée sur une gestion dynamique de l'arrondi en fonction de la position du pixel au sein de l'image. On utilise à cet effet au moins une première et une seconde règle d'arrondi dont l'application est déterminée suivant une loi dépendant de la position du pixel au sein de l'image.

On réduit ainsi la dégradation de l'image originelle. En effet, contrairement aux techniques connues et notamment celles basées sur l'insertion d'un bruit aléatoire, on ne modifie pas un pixel qui est potentiellement affichable et qui sera affiché tel quel. Les pixels dont les couleurs correspondent au jeu de couleurs affichables sont effectivement affichés avec les bonnes composantes de couleurs. En procédant à une simple gestion dynamique de l'arrondi - qui reste un arrondi - on assure que les composantes de couleurs qui sont affichables par le dispositif d'affichage restreint seront effectivement affichées et que chaque composante d'origine qui n'est pas affichable sera affichée en utilisant une composante affichable choisie à moins d'un niveau de quantification de l'afficheur.

Ainsi le procédé suivant l'invention permet un traitement de l'image minimisant la dégradation de la qualité objective de l'image originelle.

On réalise ainsi un compromis entre, d'une part, le fait de procéder à des petites variations permettant à l'oeil d'intégrer et d'avoir l'illusion d'un plus grand nombre de couleurs et, d'autre part, on évite les effets d'un bruit trop aléatoire qui engendre l'effet granuleux (*Grainy*).

La gestion de l'arrondi suit une loi qui est fonction de la position du pixel au sein de l'image. De ce fait, on effectue l'apport d'un bruit pseudo-aléatoire, ce qui limite l'apparition d'effets granuleux, de scintillements ou de fourmillements sur le flux d'images vidéos. Cet apport pseudo-aléatoire ne dépend pas de la valeur des pixels avoisinants, ce qui limite l'apparition de distorsions, c'est a dire de motifs mouvants sur le flux d'images vidéos.

De préférence, les premiers et second seconds seuils sont fixés respectivement à ¾ et ¼ et on ajoute un troisième seuil qui représente la valeur classique ½. Le procédé est appliqué, avec la séquence constituée des trois seuils précédents. On observe l'avantage du procédé de l'invention qui ne requiert pas de devoir mémoriser les valeurs pour chaque pixel adjacent (et notamment ceux au-dessus et en dessous à plus d'une ligne de balayage d'écart), facilitant ainsi la mise en oeuvre d'une méthode particulièrement bon marché.

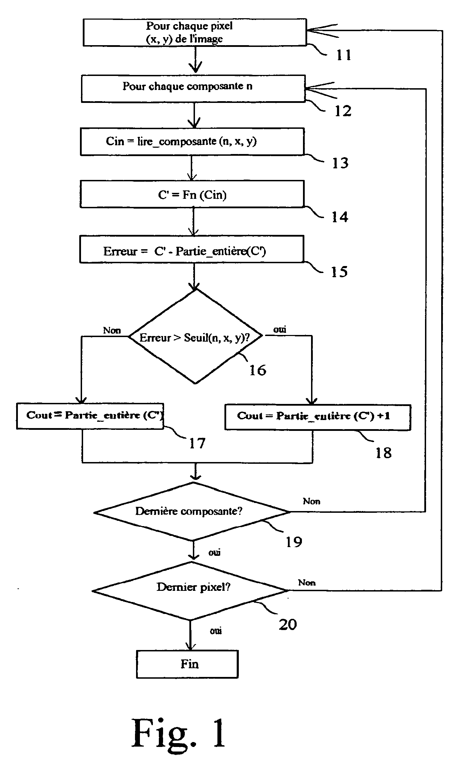

La figure 1 illustre un mode de réalisation de l'invention dans lequel le procédé est appliqué aux trois composantes de couleurs RVB (ou Rouge-Vert-Bleu) de l'image à traiter. Lorsque l'image originale est codée en mode YUV, on procède en cas de besoin à la conversion en mode RVB. On se reportera, par exemple et en cas de besoin, à la recommandation ITU-R BT.601 pour procéder à cette conversation de codage.

On note $C_{in}$ la valeur d'une composante, dans l'image d'origine, d'un pixel donné. $C_{in}$ est typiquement la valeur vraie d'une composante, telle que codée sur 8 bits par exemple. On note $C_{out}$ la valeur de cette même composante dans l'image lorsque la réduction de couleur est effectuée. $C_{out}$ correspond à un codage avec un nombre de bits qui, en général, est inférieur à celui de $C_{in}$, tel que 4 bits par exemple.

On note $F_n$ la fonction qui est associée à la n-ième composante de couleur et qui permet d'exprimer la composante vraie $C_{in}$ à une échelle dans laquelle les nombres entiers correspondent au jeu réduit de couleurs. A une telle échelle, chaque entier compris en [0, Max] correspond à une couleur qui est affichable alors que les valeurs intermédiaires entre deux entiers correspondent à des composantes vraies non affichables.

Avec un tel codage, on peut réaliser la réduction des composantes au moyen d'un arrondi, commandé de manière dynamique comme on va à présent le voir en référence à la figure 1.

Le procédé comporte une étape 11 dans laquelle on initialise le pixel (x, y) qui est à traiter.

Dans une étape 12, on initialise la composante de couleur à traiter.

Le procédé poursuit ensuite avec une étape 13 dans laquelle est lue la valeur vraie $C_{in}$ de la composante n de couleur considérée.

Dans une étape 14, on se ramène à l'échelle dans laquelle les composantes réellement affichables occupent les nombres entiers. On calcule à cet effet :

$$C' = F_n (C_{in}).$$

Dans une étape 15, on calcule l'erreur qui est la mantisse de la valeur C' calculée précédemment :

$$Erreur = C' - partie\_entière ( C')$$

On peut à ce moment réaliser un arrondi sur cette valeur qui exprime la différence entre la valeur vraie de la composante à afficher, et la valeur qui est effectivement affichable par l'afficheur considéré. Cet arrondi est effectué de manière dynamique, au moyen d'un seuil SEUIL(n, x, y) qui dépend de la position (x, y) du pixel considéré.

Dans une étape 16, on effectue une comparaison entre l'erreur calculée dans l'étape 15 et la valeur SEUIL(n, x, y).

Si l'erreur est supérieure au seuil, alors le procédé va à une étape 18 dans laquelle on arrondit à la valeur immédiatement supérieure : $C_{out}$ est fixé à l'entier immédiatement supérieur, suivant la formule :

$$C_{out} = \text{Partie\_entière} (C') + 1$$

Si l'erreur est inférieure au seuil, alors le procédé va à une étape 17 dans laquelle on arrondit à la valeur inférieure : $C_{out}$ est fixé à la partie entière de C' :

$$C_{out} = \text{Partie\_entière} (C')$$

En particulier, si $C_{in}$ est affichable, alors C' est entier et $C_{out}$ vaudra C'. En d'autres termes, une composante affichable sera effectivement affichée sans modification.

Dans une étape 19, on effectue un test pour déterminer si une autre composante de couleur doit être traitée, auquel cas on retourne à l'étape 12. Sinon, le procédé poursuit avec une étape 20 dans laquelle un nouveau test est effectué pour déterminer si un autre pixel est à traiter, auquel cas on retourne à l'étape 11 précédente.

Lorsque tous les pixels et toutes les composantes ont été traitées, le procédé s'achève.

Le procédé qui vient d'être décrit en relation avec la figure 1 est très facile à implémenter et ce tout spécialement au moyen d'une architecture utilisant massivement des circuit logiques et notamment des bascules commandées par horloge asservie (ou « gated clock» dans la littérature anglo-saxonne). Cela permet alors de réduire la consommation énergétique pour une fonction identique de stockage.

En pratique, on choisira le seuil SEUIL(n, x, y) de manière à ne dépendre que de la seule position (x, y) du pixel considéré et non de la composante de couleur. On assure ainsi, d'une manière simple, un égal traitement à toutes les composantes de couleurs. L'implémentation du procédé y gagne en simplicité sans perdre en qualité.

Si Seuil (n, x, y) = 0.5 on constate que l'on retombe sur le principe de l'arrondi fixe « plus proche entier ».

Si SEUIL(n, x, y) = 0, on retombe sur l'arrondi fixe « entier inférieur ». Il est à noter que, en pratique, cette valeur devra être évitée car elle provoque l'apparition de scintillements dans un flux vidéo. Il est à noter que l'arrondi « entier supérieur » est aussi à éviter, car il donne lieu au même défaut dans un flux vidéo.

On a trouvé que l'on obtient des résultats remarquablement intéressants, notamment pour le respect des dégradés de couleurs, lorsque les valeurs prises par le seuil SEUIL(n, x, y) sont symétriques par rapport à la valeur 0.5. En outre, on recherchera plutôt les valeurs qui sont distribuées d'une manière uniforme dans l'intervalle ]0, 1[.

Afin de faciliter l'implémentation du procédé, on utilise des fractions de puissance de 2 pour réaliser les différentes valeurs prises par Seuil (n, x, y).

Il est à observer , et c'est un avantage remarquable de l'invention, que l'on peut réaliser l'invention sans même avoir à recourir au calcul d'erreur dans l'étape 16 décrite précédemment. En effet, on peut obtenir très simplement le même effet en incrémentant la valeur de la couleur à coder d'une certaine valeur avant la réduction de la nième composante de couleur, avec une commande de la valeur d'ajout au moyen d'un simple compteur de pixel. Cela a pour effet de réaliser, d'une manière très simple, la gestion dynamique de l'arrondi. En effet, comme on peut le constater, si l'on divise la nième composante par 4 après une incrémentation de 1, cela revient à un résultat équivalent à l'emploi d'un seuil à 0.75 lors de l'application de la réduction. Si l'on incrémente d'une valeur égale à 2, on obtient alors l'arrondi « plus proche entier » classique. Si l'on incrémente d'une valeur égale à 3, on obtient alors un effet équivalent à l'usage d'un seuil de 0.25.

On voit ainsi avec quelle facilité on peut obtenir la gestion de l'arrondi dynamique, et ce sans besoin de recourir à l'emploi de coûteuses tables , voire même un comparateur.

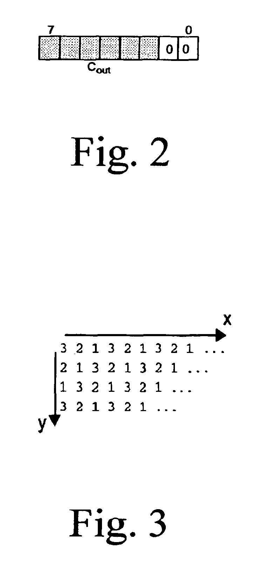

Dans un mode de réalisation préféré, on implémente le mécanisme de seuil dynamique au moyen d'un jeu de trois valeurs : ¼ ; ½ ; ¾ , lesquelles sont particulièrement faciles à mettre en oeuvre au moyen de circuits logiques. La dépendance du seuil à la position du pixel est réalisée au moyen d'un simple compteur/décompteur de pixel PELC (*PixEL Counter*) qui permet de réaliser la séquence ¼ ; ½ ; ¾ ; ¼ ; ½ ; ¾ , ¼ ; ½ ; ¾ ou (1,2, 3, 1,2, 3, 1, 2, 3 etc.. ). Selon le parcours de l'image, cette méthode tend à créer une ou plusieurs directions privilégiées dans l'image résultante, qui ne devient perceptible qu'en cas de forte réduction de couleurs (par exemple 4096 couleurs). Sachant que les pixels sont affichés sous forme carrée (pour un écran de type LCD ou *Liquid Crystal Display*), ou oblongue (phosphène de tube cathodique), on peut utiliser avantageusement la direction privilégiée qu'engendre l'utilisation d'un compteur pour renforcer l'effet visuel obtenu et améliorer encore la qualité de l'affichage. La figure 3 illustre ainsi la manière de privilégier une direction à 45 degrés au moyen d'un compteur 3-2-1.

Lorsque les composantes de l'image d'origine sont codées sur $N_n$ bits et que la réduction du nombre de couleurs les fait passer à $P_n$ bits $< N_n$, alors la fonction $F_n$ peut s'écrire :

$$F_n = C / 2^{Nn-Pn}$$

Dans le cas où SEUIL(n,x,y) prend pour valeurs des fractions de puissances de 2, on peut l'écrire sous sa forme fractionnelle:

$$SEUIL(n,x,y) = SEUIL_q(n, x, y) / 2^S$$

On peut alors écrire la méthode sous la forme suivante :
Pour chaque pixel (x,y)
Pour chaque composante n

$$C_{in} = lire\_composante(n,x,y)$$

$$C' = C_{in} + Partie\_Entière(2^{Nn-Pn-S} \star SEUIL_q(n,x,y))$$

$$C_{out} = C'[N_n+1,N_n-P_n+1]$$

$$Si\ C_{out} >= 2^{Pn}$$

$$C_{out} = 2^{Pn}-1$$

fin si

fin pour

fin pour

Avec C'[N+1,N-$P_n$+1] signifiant que l'on accède les bits N+1 à N-$P_n$+1 de C', soit donc les $P_n$+1 bits les plus significatifs de C'. Sous cette forme, la méthode ne met en jeux que des opérations sur des entiers et des puissances de 2. Son implémentation est alors particulièrement efficace.
Dans le mode de réalisation préféré de l'invention, on utilise un compteur PELC prenant successivement les valeurs 3, 2 et 1. Les valeurs de seuil correspondantes sont alors ¾, ½ et ¼. On réalise un parcours non trivial de l'image d'origine, au moyen d'un pavage rectangulaire régulier ou non. L'image est originellement codée en RGB ou YUV, codée sur 9 bits non signés par composante. L'image en couleurs réduites est codée sur $P_1$, $P_2$ et $P_3$ bits, alignés MSB (*Most Significant Bit*) dans un octet.
Avec une composante $C_{out}$ codée sur au plus $P_n$=6 bits telle qu'elle est illustrée dans la figure 2, on a une réalisation suivante :

$$pelc = 3$$

$$Répéter$$

$$Pour\ n=1\ à\ 3$$

$$C_{in} = lire\_composante(n)$$

$$C_1 = C_{in} + pelc \star 2^{7-Pn}$$

$$C_2 = C_1[9, 1]$$

$$\text{Si } C_2[8] == 1$$

$$C_3 = 255$$

sinon

$$C_3 = C_2[7,0]$$

fin si

$$C_{out} = \text{bitand}(C_3, 256\text{-}2^{8\text{-}Pn})$$

$$\text{envoyer}(C_{out})$$

fin pour

$$\text{Si pelc} == 1$$

$$\text{pelc} = 3$$

sinon

$$\text{pelc} = \text{pelc-1}$$

fin si

$$\text{... tant que fin\_image==faux}$$

Un exemple d'application du procédé est la vidéo nomade. $P_n$ peut prendre les valeurs 4, 5 ou 6. On réalise alors de préférence le procédé de traitement au moyen de circuits qui sont simples à implémenter. On notera que l'on n'a pas besoin de mémoire puisqu'il n'est pas nécessaire, contrairement à certaines des autres techniques connues, de mémoriser les pixels adjacents pour traiter un pixel donné.

Le procédé qui vient d'être décrit permet de supprimer les effets de moire et d'éviter la formation d'artefacts tout en préservant la fidélité de l'image originelle puisque les pixels ne sont qu'à un niveau de quantification, au maximum, de l'image originelle. En outre, il convient de noter que ce procédé est très simple à mettre en oeuvre et que, par conséquent, il conduit largement à la réduction du coût de fabrication d'un dispositif matériel mettant en oeuvre le procédé qui vient d'être décrit. On constatera enfin que le procédé n'introduit aucune latence dans le temps de traitement, ce qui autorise sa mise en oeuvre pour le traitement des images vidéos.

## Revendications

1. Procédé de traitement d'une image destinée à être affichée avec un nombre réduit de niveaux ou du nombre de bits utilisé pour représenter n composantes de couleurs, ledit traitement comportant les étapes suivantes :

   - codage de chacune desdites n composantes de couleurs ;
   - réduction du nombre de niveaux ou du nombre de bits utilisé pour représenter lesdites n composantes de couleur suivant un arrondi dynamique commandé au moyen d'un compteur d'échantillons ou de pixels;

   **caractérisé en ce que** ledit arrondi dynamique est basé sur un jeu de trois seuils ¼, ½ et ¾ commandés au moyen du compteur d'échantillons ou de pixels, lesdits seuils étant successivement mis en oeuvre dans l'opération de réduction pour chacune desdites composantes de couleur.

2. Procédé selon la revendication 1 **caractérisé en ce que** l'ordre de mise en oeuvre desdits trois seuils est fixé de manière à privilégier une direction voisine de 45 degrés sur le système d'affichage de l'image.

3. Dispositif de traitement d'une image avec une réduction de couleur sur un ensemble réduit de niveaux ou du nombre de bits utilisé pour représenter n composantes de couleurs, ledit dispositif comportant :

- des moyens de codage pour chacune des n composantes de couleurs ;
- des moyens pour réduire le nombre de niveaux ou le nombre de bits utilisé pour représenter au moins une desdites composantes de couleur suivant un arrondi dynamique commandé au moyen d'un compteur d'échantillons ou de pixels;

**caractérisé en ce que** ledit arrondi dynamique est basé sur un jeu de trois seuils ¼, ½ et ¾ commandés au moyen du compteur d'échantillons ou de pixels, lesdits seuils étant successivement mis en oeuvre dans l'opération de réduction pour chacune desdites composantes de couleur.

**4.** Dispositif de traitement selon la revendication 3 **caractérisé en ce que** l'ordre de mise en oeuvre desdits trois seuil est fixé de manière à privilégier une direction voisine de 45 degrés sur le système d'affichage.

**Patentansprüche**

**1.** Verfahren zum Verarbeiten eines Bildes, das mit einer reduzierten Anzahl von Ebenen oder reduzierten Anzahl von Bits zur Darstellung von n Farbkomponenten angezeigt wird, wobei das Verfahren die folgenden Schritte umfasst:

- Codieren jeder der n Farbkomponenten;
- Verringern der Anzahl von Ebenen oder der Anzahl der Bits zur Darstellung der n Farbkomponenten in Übereinstimmung mit einem dynamischen Abrunden, das durch Mittel eines Samples oder eines Pixel-Zählers gesteuert wird;

**dadurch gekennzeichnet, dass** das dynamische Abrunden auf einem Satz von drei Schwellenwerten ¼, ½ und ¾ basiert, die nacheinander in der Reduzieropertion für jede der Farbkomponenten verwendet werden.

**2.** Verarbeitungsverfahren nach Anspruch 1, **dadurch gekennzeichnet, dass** die Reihenfolge der Verwendung der drei Schwellenwerte festgelegt ist, um eine Richtung im Bereich von 45 Grad auf dem Bildanzeigesystem zu erreichen.

**3.** Vorrichtung zur Verarbeitung eines Bildes mit einer Farb-Reduktion auf einer reduzierten Gruppe von n Stufen oder der Anzahl von Bits zur Darstellung von n Farbkomponenten, wobei die Vorrichtung umfasst:

- Mittel zum codieren jeder der n Farbkomponenten;
- Mittel zur Verringerung der Anzahl von Ebenen oder der Anzahl von Bits zur Darstellung mindestens einer der n Farbkomponenten in Übereinstimmung mit einem dynamischen Abrunden, das durch Mittel eines Samples oder eines Pixel-Zählers gesteuert wird;

**dadurch gekennzeichnet, dass** das dynamische Abrunden auf einem Satz von drei Schwellenwerten ¼, ½ und ¾ basiert, gesteuert durch die Sample oder Pixel-Zähler, wobei die Schwellenwerte nacheinander in der Reduzieroperation für jede der Farbkomponenten verwendet werden.

**4.** Verarbeitungsvorrichtung nach Anspruch 3, **dadurch gekennzeichnet, dass** die Reihenfolge der Verwendung der drei Schwellenwerte festgelegt ist, um eine Richtung im Bereich von 45 Grad auf dem Bildanzeigesystem zu erreichen.

**Claims**

**1.** A method for processing an image meant to be displayed with a reduced number of levels or of the number of bits used for representing n color components, said method comprising the following steps:

- coding each one of said n color components;
- reducing the number of levels or the number of bits used for representing said n color components in accordance with a dynamic round off controlled by means of a sample or pixels counter;

**characterized in that** said dynamic round off is based on a set of three thresholds ¼, ½ and ¾ that are successively used in the reduction operation for each one of said color components.

**2.** A processing method according to claim 1 **characterized in that** the order of use of said three thresholds is fixed in order to encourage a direction close to 45 degrees on the image display system.

**3.** A device for processing an image with color reduction on a reduced group of n levels or the number of bits used for representing n color components, said device comprising:

- means for coding each n color components;
- means for reducing the number of levels or the number of bits used for representing at least one of said n color components in accordance with a dynamic round off controlled by means of a sample or pixels counter;

**characterized in that** said dynamic round off is based on a set of three thresholds ¼, ½ and ¾ controlled by means of said sample or pixels counter, said thresholds being successively used in the reduction operation for each one of said color components.

**4.** A processing device according to claim 3 **characterized in that** the order of use of said three thresholds is fixed in order to encourage a direction close to 45 degrees on the image display system.

Fig. 1

7                 0

| | | | | | | 0 | 0 |

C$_{out}$

# Fig. 2

             x

```
3 2 1 3 2 1 3 2 1 ...
2 1 3 2 1 3 2 1 ...
1 3 2 1 3 2 1 ...
3 2 1 3 2 1 ...
```
y

# Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1039416 A
- EP 1137266 A
- US 5469190 A
- EP 0359080 A
- US 5495346 A
- US 5777599 A

**Littérature non-brevet citée dans la description**

- **ROBERT ULICHNEY.** Frequency analysis of ordered dither. *SPIE,* 1989, vol. 1079, 361-373
- **FLOYD AND STEINBERG.** An adaptive algorithm for spatial grayscale. *proceedings of the society for information display,* 1976, vol. 17 (2), 75-77